# EUROPÄISCHE PATENTSCHRIFT

(11) **EP 1 752 336 B1**
(45) Veröffentlichungstag und Bekanntmachung des Hinweises auf die Patenterteilung: **09.04.2008**
(21) Anmeldenummer: 06008929.9
(22) Anmeldetag: 28.04.2006
(51) Int. Cl.: B60Q 1/52, B60Q 9/00, G08G 1/16

(54) **Verfahren zur Bestimmung der Dauer eines zu gebenden Warnsignals**
Method for determining if the duration termining the duration of a warning signal
Procede pour déterminer la durée d'un signal d'avertissement

(30) Priorität: 12.08.2005 DE 102005038180
(43) Veröffentlichungstag der Anmeldung: 14.02.2007
(73) Patentinhaber: AUDI AG, 85045 Ingolstadt (DE)
(72) Erfinder: Popken, Markus, 85139 Wettstetten (DE); Erlacher, Markus, 85077 Manching (DE)
(74) Vertreter: Thielmann, Frank

(56) Entgegenhaltungen:
- EP-A2- 0 443 185
- EP-A2- 1 346 877
- WO-A-03/080390
- DE-A1- 19 937 489
- DE-C1- 4 313 568

## Beschreibung

Die Erfindung betrifft ein Verfahren zur Bestimmung der Dauer eines zu gebenden Warnsignals bei einem Spurwechselassistenzsystem eines Kraftfahrzeugs, umfassend wenigstens eine optische Anzeigevorrichtung, eine Steuereinheit und wenigstens einen das rückwärtige und seitliche Umfeld des Kraftfahrzeugs erfassenden Sensor, wobei das Spurwechselassistenzsystem zur Anzeige bei einem Spurwechsel möglicherweise gefährdender Fahrzeuge auf benachbarten Spuren über die optische Anzeigevorrichtung während der von der Steuereinheit aus den Daten des Sensors ermittelten Dauer des zu gebenden Warnsignals ausgebildet ist.

Spurwechselassistenzsysteme, wie sie beispielsweise aus der DE 103 18 741 A1 bekannt sind, nutzen die Daten wenigstens eines Sensors zur Überwachung des seitlichen und rückwärtigen Umfelds des Fahrzeugs, um für das jeweils nächstgelegene, dort befindliche Fahrzeug einen Gefährdungsgrad zu bestimmen. Überschreitet dieser eine gewisse Schwelle, wird ein optisches Signal ausgelöst, meist eine LED an einem der Außenspiegel. Strebt der Fahrer einen Spurwechselvorgang an und blickt daher in den Außenspiegel, fällt sein Blick zwangsläufig auch auf die warnende optische Anzeigevorrichtung.

Üblicherweise wird eine solche optische Anzeige bei Überschreiten einer gewissen Gefährdungsgradschwelle, die von Geschwindigkeit und Position des auf dieser Spur nächstgelegenen Fahrzeugs abhängt, eingeschaltet und schaltet sich wieder aus, wenn das überholende Fahrzeug das eigene Fahrzeug vollständig passiert hat. Das bedeutet, dass die optische Anzeige selbst dann noch ihr Warnsignal aussendet, wenn das Fahrzeug fast vorbeigefahren ist und der Fahrer es durchaus als möglich ansieht, jetzt schon einen Spurwechselvorgang einzuleiten. Er wird jedoch davon abgehalten, da sich ein weiteres Fahrzeug im toten Winkel befinden könnte, worauf die Anzeige auch hinweisen könnte. Das System kann daher inkompetent wirken, da ein Warnsignal angezeigt wird, obwohl ein Spurwechsel möglich ist.

Der Erfindung liegt daher die Aufgabe zugrunde, ein Verfahren zur Bestimmung der Dauer eines zu gebenden Warnsignals bei einem Spurwechselassistenzsystem anzugeben, das eine das Fahrerverständnis besser widerspiegelnde Anzeigedauer ermöglicht.

Zur Lösung dieser Aufgabe ist bei einem Verfahren der eingangs genannten Art erfindungsgemäß vorgesehen, dass die Steuereinheit bei der Berechnung der Dauer neben den Daten des Sensors auch einen Reaktionsrechenwert, der ein Maß für die Reaktionszeit des Fahrers darstellt, und einen Spurwechselrechenwert, der ein Maß für die Zeit, die das Kraftfahrzeug für einen Spurwechsel benötigt, darstellt, berücksichtigt.

Wie schon anschaulich klar ist, ist es nicht möglich, mit dem Kraftfahrzeug die Spur sozusagen in "Nullzeit" zu wechseln. Dafür ist zum einen die Reaktionszeit des Fahrers verantwortlich, zum anderen benötigt das Kraftfahrzeug für den Spurwechsel eine gewisse Zeit. Erfindungsgemäß werden diese beiden Zeiten in Form von vorgegebenen oder geeignet bestimmten Rechenwerten bei der Bestimmung der Dauer des Warnsignals mit herangezogen. Dies führt dazu, dass die Warnsignaldauer an ihrem Ende um einen gewissen Zeitraum verkürzt wird, in dem das überholende Fahrzeug während der Reaktionszeit des Fahrers bzw. dem Beginn des Spurwechsels den Gefährdungsbereich schon längst verlässt. Damit wird der Vorteil erreicht, dass das System seine Warnsignaldauer für den Fahrer intuitiv verständlicher gestaltet und dadurch kompetenter wirkt. Weiterhin wird die Einschränkung durch das Spurwechselassistenzsystem reduziert, indem vorteilhafterweise nur noch der tatsächlich gefährdende Zeitraum zu einem Aufleuchten der optischen Anzeigevorrichtung führt.

Zweckmäßigerweise kann die Steuereinheit die Summe von Reaktionsrechenwert und Spurwechselrechenwert vom Ende der aus den Daten des Sensors ermittelten Dauer abziehen. Dabei werden, um einen größtmöglichen Grad an Sicherheit zu erreichen, Minimalzeiten angesetzt. Ein normal schnell reagierender Mensch hat eine Reaktionszeit von etwa 400 ms. Menschen, die extrem schnell reagieren, zeigen eine Reaktionszeit von etwa 200 ms. Aus Versuchen und Messungen ist weiterhin bekannt, dass die typische Spurwechselzeit im Bereich von 1 s liegt. Der Bereich läuft von etwa 0,5 s bis zu 1,5 s. Dabei hängt diese Spurwechselzeit im Allgemeinen nicht von der Geschwindigkeit ab, da die Bewegung senkrecht zur Fahrtrichtung unabhängig von der Bewegung in Fahrtrichtung ist. Üblicherweise würden in diese Ausführungsform also etwa 0,7 s vom Ende der Warnanzeigedauer abgezogen. Mit der Spurwechselzeit ist dabei die Zeit gemeint, die das Fahrzeug benötigt, um zumindest teilweise in die Nachbarspur einzudringen.

Dabei kann der Spurwechselrechenwert aufgrund in der Steuereinheit gespeicherter Werte bestimmt werden. Vorteilhafterweise sind dabei für den entsprechenden Fahrzeugtyp charakteristische Werte vorgesehen.

Vorzugsweise können zu bestimmten Zeitpunkten die Zeitdauern eines tatsächlichen Spurwechsels gemessen werden und diese Zeitdauern der Bestimmung des Spurwechselrechenwerts zugrunde gelegt werden. Zu dieser Messung kann mit besonderem Vorteil ein Fahrerassistenzsystem zur Benachrichtigung des Fahrers beim Verlassen der Fahrspur, umfassend vorzugsweise eine Kamera und eine Bildverarbeitungseinheit, genutzt werden. Grundsätzlich ist jedoch auch die Vermessung aufgrund anderer, im Kraftfahrzeug vorhandener Erfassungsmittel denkbar. Mit besonderem Vorteil gehen in diese Ausführungsform nicht nur die Eigenschaften des Fahrzeugtyps ein, sondern auch das Fahrverhalten des Fahrzeugführers. Zu bestimmten Zeitpunkten wird dabei eine Messung der Spurwechselzeit durchgeführt. Damit ist eine Art "Online-Kalibrierung" gegeben, wobei die gemessenen Werte gegebenenfalls auch nach Geschwindigkeiten aufgeschlüsselt werden können.

In weiterer Fortbildung des Erfindungsgedankens kann vorgesehen sein, dass die Steuereinheit bei der Berechnung der Dauer des Warnsignals neben den Daten eines ersten, auf der benachbarten Fahrspur im Rück- und Seitenraum nächsten Fahrzeugs auch die Daten eines oder mehrerer weiterer, diesem folgender Fahrzeuge auf derselben Spur berücksichtigt, falls solche weiteren Fahrzeuge durch den Sensor ermittelt werden. In herkömmlichen Spurwechselassistenzsystemen werden die Daten der Sensoren verarbeitet und in Objekte zerlegt. Für das auf der betreffenden Spur nächstgelegene Objekt wird dann eine Gefährdungsgradschwelle berechnet. Dies kann man sich als eine Art unsichtbare Linie vorstellen, die das nächstgelegene Objekt überschreiten muss, damit ein Warnsignal erzeugt wird. Fahren nun mehrere Fahrzeuge hintereinander auf der benachbarten Fahrspur, kann es vorkommen, dass die Warnanzeige aufgrund des nächsten Fahrzeugs erlischt, obwohl sich das folgende Fahrzeug, das nun getrennt betrachtet wird, schon kurz vor Überschreiten der Gefährdungsgradschwelle befindet. Die Folge ist, dass bei herkömmlichen Systemen das Warnsignal kurzzeitig erlischt. Der Fahrer wird von diesem Verhalten der optischen Anzeigevorrichtung irritiert. Häufig wird das kurzzeitige Erlöschen als eine Art Flackern oder Unentschlossenheit des Systems interpretiert. Weiterhin ist bei den herkömmlichen Systemen besonders bei einem kurzen Erlöschen des Warnsignals ein Spurwechsel kaum möglich, da der Fahrer nicht rechtzeitig reagieren kann. Dieses Problem wird vorteilhafterweise durch das erfindungsgemäße Verfahren gelöst. Durch die Betrachtung mehrerer nächstgelegener Objekte ist es möglich, ein solches kurzzeitiges Erlöschen, auf das der Fahrer ohnehin nicht reagieren kann, zu verhindern.

Vorzugsweise werden dabei die Daten des ersten Fahrzeugs und eines weiteren, zweiten, dem ersten Fahrzeug auf derselben Spur folgenden Fahrzeugs berücksichtigt. In besonders vorteilhafter Ausgestaltung kann durch die Steuereinheit der zeitliche Abstand zwischen dem ersten und dem zweiten Fahrzeug ermittelt werden und bei Unterschreitung eines Schwellwertes für den zeitlichen Abstand eine zusammenhängende Dauer des Warnsignals für das erste und das zweite Fahrzeug bestimmt werden. Der Schwellwert legt dabei fest, auf ein wie großes Zeitfenster der Fahrer überhaupt reagieren kann. Es handelt sich dabei um eine Zeitlücke zwischen den beiden nächsten Fahrzeugen, also dem ersten und dem zweiten Fahrzeug, da diese geschwindigkeitsabhängig ist. In dieser Ausgestaltung des Verfahrens ist es auch möglich, dass für ganze Fahrzeugketten das Warnsignal kontinuierlich bestehen bleiben kann. Denn wenn das momentan erste Fahrzeug den Gefährdungsbereich bzw. Bereich der Kritikalität verlassen hat, wird das zweite Fahrzeug zum neuen ersten Fahrzeug, und - falls vorhanden - ein weiteres zweites Fahrzeug tritt hinzu. Dann wird erneut berechnet, ob ein Erlöschen des Warnsignals zwischen diesen beiden Fahrzeugen sinnvoll ist. So wird letztendlich auch eine Kette von beispielsweise zehn hintereinander fahrenden Fahrzeugen als ein einziges, kontinuierliches Warnsignal dargestellt.

Weiterhin betrifft die Erfindung auch ein Kraftfahrzeug, umfassend ein Spurwechselassistenzsystem, das zur Durchführung des Verfahrens in einer der obigen Ausführungsformen ausgebildet ist.

Weitere Vorteile und Einzelheiten der Erfindung ergeben sich aus dem im folgenden beschriebenen Ausführungsbeispiel sowie anhand der Zeichnungen. Dabei zeigen:
- Fig. 1: ein erfindungsgemäßes Kraftfahrzeug mit Spurwechselassistenzsystem in einer Draufsicht,
- Fig. 2: eine zweispurige Straße mit drei Verkehrsteilnehmern, und
- Fig. 3: einen Ablaufplan eines erfindungsgemäßen Verfahrens.

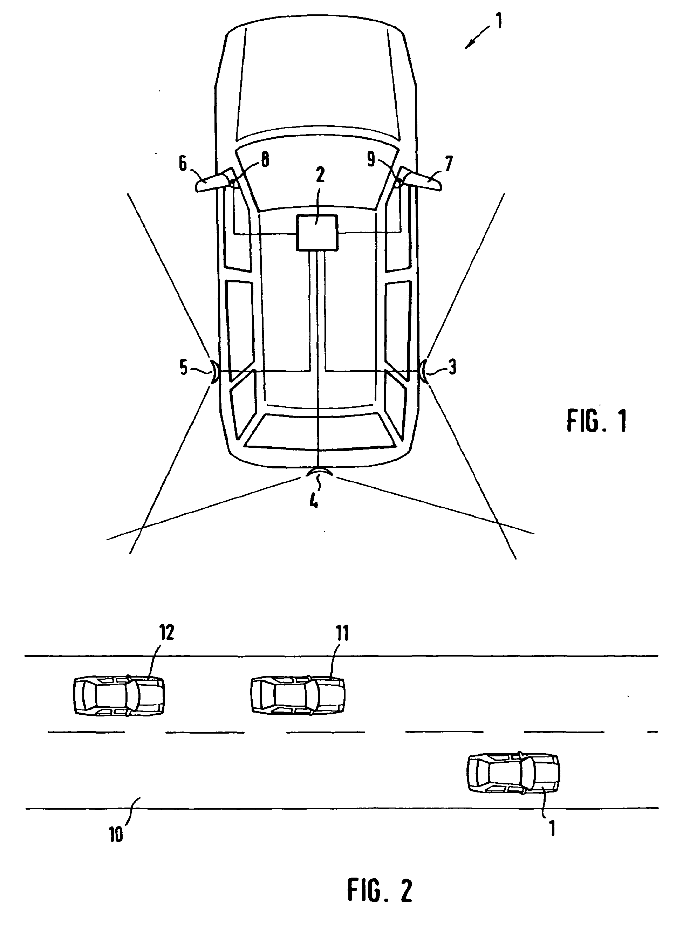

Fig. 1 zeigt ein Kraftfahrzeug 1 mit einem Spurwechselassistenzsystem. Dieses umfasst ein Steuergerät 2 zur Verarbeitung der Daten und ist an drei Sensoren 3, 4, 5 angeschlossen, die auf elektronischem Weg ein "Bild" des Fahrzeugsumfelds hinter und neben dem Fahrzeug aufnehmen. Dadurch können Fahrzeuge erfasst werden, die sich von hinten nähern, sowie Fahrzeuge, die sich im so genannten toten Winkel aufhalten. In das Steuergerät 2 ist ein Algorithmus implementiert, der das erfindungsgemäße Verfahren einsetzt. Zusätzlich umfasst das Kraftfahrzeug 1 einen linken und einen rechten Außenspiegel 6 bzw. 7, die jeweils mit einer optischen Anzeigevorrichtung 8 bzw. 9 versehen sind. Dabei können beispielsweise Leuchtdioden verwendet werden.

Fig. 2 zeigt eine zweispurige Straße 10. Auf der rechten Spur der Straße fährt das erfindungsgemäße Kraftfahrzeug 1. Zwei weitere Verkehrsteilnehmer 11 und 12 nähern sich mit höherer Geschwindigkeit auf der linken Spur und schicken sich an, das Kraftfahrzeug 1 zu überholen.

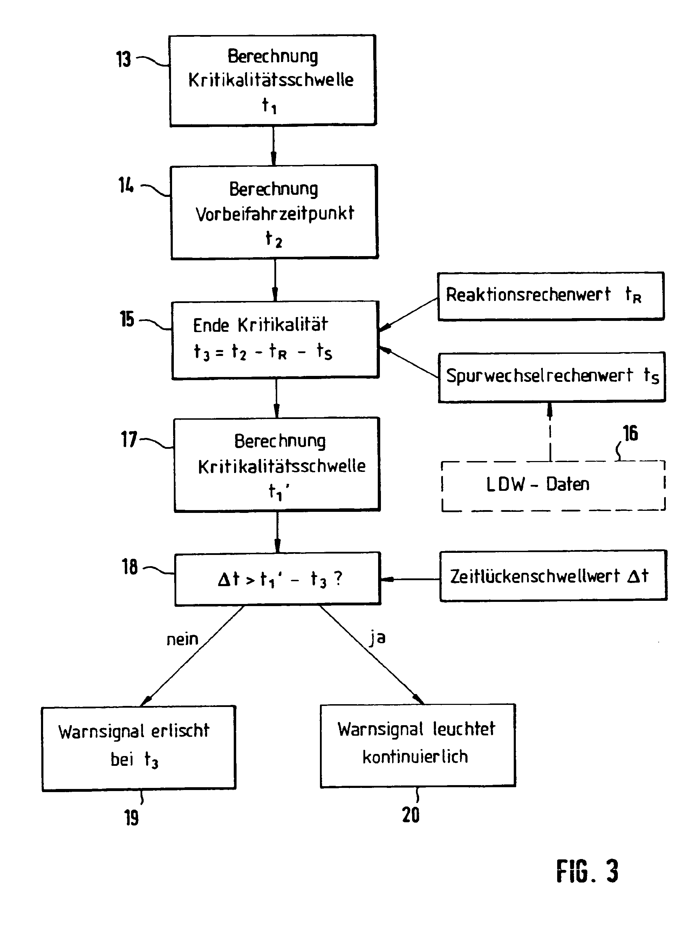

Anhand von Fig. 3 wird nun beschrieben, wie das erfindungsgemäße Verfahren in einer Situation gemäß Fig. 2 arbeitet. Obwohl hier ein sequentieller Ablauf des Verfahrens beschrieben ist, ist es doch klar, dass mit leichten Modifikationen erreicht werden kann, dass die Steuereinheit in Echtzeit auf beispielsweise einen Bremsvorgang eines der Fahrzeuge 11 und 12 reagieren kann und die ermittelten Warnsignaldauern entsprechend anpassen kann.

Im Schritt 13 wird zunächst die Kritikalitätsschwelle t₁ berechnet. Diese entspricht dem Zeitpunkt, ab dem das Fahrzeug 11 im Falle eines Spurwechsels des Kraftfahrzeugs 1 eine Gefahr für dieses darstellt. t₁ ist also der Zeitpunkt, zu dem in diesem Fall ein optisches Warnsignal angezeigt wird, indem die Leuchtdioden der optischen Anzeigevorrichtungen 8 und 9 eingeschaltet werden.

Danach wird im Schritt 14 der Vorbeifahrzeitpunkt t₂ berechnet. Dies ist der Zeitpunkt, zu dem das Fahrzeug 11 das Kraftfahrzeug 1 auf der linken Spur passiert haben wird.

Aus diesem Zeitpunkt wird ein Ende der Kritikalität t₃ berechnet, indem vom Vorbeifahrzeitpunkt t₂ ein Reaktionsrechenwert t_{R} und ein Spurwechselrechenwert tₛ abgezogen werden. Beide Werte sind im Speicher der Steuereinheit abgelegt. Dabei ist es möglich, dass der Spunivechselrechenwert tₛ regelmäßig aus den Daten eines zusätzlich vorgesehenen "Lane Departure Warning" Systems neu bestimmt wird, wie dies bei 16 angedeutet ist. !m nächsten Schritt 17 des Verfahrens wird nun die Gefährdungsgradschwelle t₁' des zweiten Fahrzeugs 12 berechnet. Danach findet in Schritt 18 ein Vergleich der Differenz aus t₁' und t₃ mit einem im Speicher der Steuereinheit 2 abgelegten Zeitlückenschwellwert Δt statt. Ist der Zeitlückenschwellwert kleiner als die Differenz, so wird nach Schritt 19 festgelegt, dass das Warnsignal bei t₃ erlischt. Die Lücke zwischen den Fahrzeugen 11 und 12 wird vom System als groß genug angesehen, dass ein sicherer Spurwechsel vorgenommen werden kann und der Fahrer nicht durch ein kurzzeitiges Erlöschen der LEDs der optischen Anzeigevorrichtungen 6 bzw. 7 irritiert wird. Ist der Zeitlückenschwellwert Δt jedoch größer als die Differenz t₁' -t₃, so wird durch die Steuereinheit 2 festgelegt, vgl. Schritt 20, dass das Warnsignal kontinuierlich leuchtet. Das heißt, das Warnsignal leuchtet auch während einer möglicherweise auftretenden Zeitlücke zwischen t₃ und t₁'.

Natürlich sind auch andere Ausführungsformen denkbar. So kann bei einem längeren LKW vorgesehen sein, dass immer die drei nächsten Fahrzeuge untersucht werden, da sich zwei Fahrzeuge neben dem LKW befinden können.

## Patentansprüche

1. Verfahren zur Bestimmung der Dauer eines zu gebenden Warnsignals bei einem Spurwechselassistenzsystem eines Kraftfahrzeugs, umfassend wenigstens eine optische Anzeigevorrichtung, eine Steuereinheit und wenigstens einen das rückwärtige und seitliche Umfeld des Kraftfahrzeugs erfassenden Sensor, wobei das Spurwechselassistenzsystem zur Anzeige bei einem Spurwechsel möglicherweise gefährdender Fahrzeuge auf benachbarten Spuren über die optische Anzeigevorrichtung während der von der Steuereinheit aus den Daten des Sensors ermittelten Dauer des zu gebenden Warnsignals ausgebildet ist,
**dadurch gekennzeichnet,**
**dass** die Steuereinheit bei der Berechnung der Dauer neben den Daten des Sensors auch einen Reaktionsrechenwert, der ein Maß für die Reaktionszeit des Fahrers darstellt, und einen Spunivechselrechenwert, der ein Maß für die Zeit, die das Kraftfahrzeug für einen Spurwechsel benötigt, darstellt, berücksichtigt.

2. Verfahren nach Anspruch 1, **dadurch gekennzeichnet, dass** die Steuereinheit die Summe von Reaktionsrechenwert und Spurwechselrechenwert vom Ende der aus den Daten des Sensors ermittelten Dauer abzieht.

3. Verfahren nach Anspruch 1 oder 2, **dadurch gekennzeichnet, dass** der Spurwechselrechenwert aufgrund in der Steuereinheit gespeicherter Werte bestimmt wird.

4. Verfahren nach einem der vorangehenden Ansprüche, **dadurch gekennzeichnet, dass** zu bestimmten Zeitpunkten die Zeitdauern eines tatsächlichen Spurwechsels gemessen werden und diese Zeitdauern der Bestimmung des Spurwechselrechenwerts zugrunde gelegt werden.

5. Verfahren nach Anspruch 4, **dadurch gekennzeichnet, dass** die tatsächlichen Spurwechsel durch ein Fahrerassistenzsystem zur Benachrichtigung des Fahrers beim Verlassen der Fahrspur, umfassend vorzugsweise eine Kamera und eine Bildverarbeitungseinheit, gemessen werden.

6. Verfahren nach einem der vorangehenden Ansprüche, **dadurch gekennzeichnet, dass** die Steuereinheit bei der Berechnung der Dauer des Warnsignals neben den Daten eines ersten, auf der benachbarten Fahrspur im Rück- und Seitenraum nächsten Fahrzeugs auch die Daten eines oder mehrerer weiterer, diesem folgender Fahrzeuge auf der selben Spur berücksichtigt, falls solche weiteren Fahrzeuge durch den Sensor ermittelt werden.

7. Verfahren nach Anspruch 6, **dadurch gekennzeichnet, dass** die Daten des ersten Fahrzeugs und eines weiteren, zweiten, dem ersten Fahrzeug auf der selben Spur folgenden Fahrzeugs berücksichtigt werden.

8. Verfahren nach Anspruch 7, **dadurch gekennzeichnet, dass** durch die Steuereinheit der zeitliche Abstand zwischen dem ersten und dem zweiten Fahrzeug ermittelt wird und bei Unterschreitung eines Schwellwertes für den zeitlichen Abstand eine zusammenhängende Dauer des Warnsignals für das erste und das zweite Fahrzeug bestimmt wird.

9. Kraftfahrzeug, umfassend ein Spurwechselassistenzsystem, das zur Durchführung des Verfahrens nach einem der Ansprüche 1-8 ausgebildet ist.

## Claims

1. Process for determining the duration of a warning signal to be given by a vehicle lane-change support system, comprising at least one optical indicating device, a control unit and at least one sensor recording the area to the rear and to the side of the vehicle, whereby the course-change support system is developed to indicate, by means of the optical indication device, other vehicles, in adjacent lanes, that may be a hazard when changing lane, with the duration of the warning signal to be given out being determined from the sensor data by the control unit,
**characterized in that**
the control unit also takes into account a computed reaction value, which represents a measure of the driver's reaction time, and a computed lane-change value that represents a measure of the time needed by the vehicle to change lane.

2. Process in accordance with claim 1, **characterized in that** the control unit subtracts the sum of the computed reaction value and the computed lane-change value from the end of the duration determined from the data of the sensor.

3. Process in accordance with claims 1 or 2, **characterized in that** the computed lane-change value is determined on the basis of the values stored in the control unit.

4. Process in accordance with one of the preceding claims, **characterized in that** the period of duration of an ongoing change in lane is determined at specific time points and the said periods of duration form the basis for determining the computed lane-change value.

5. Process in accordance with claim 4, **characterized in that** the given ongoing changes of lane are gauged by means of a driver support system, for alerting a driver when leaving a given lane, preferably comprising a camera and an image processing unit.

6. Process in accordance with one of the preceding claims, **characterized in that** the control unit takes into account, together with the data on a first vehicle behind and to the side in the adjacent lane, also the data of one or more further following vehicles in the same adjacent lane, when calculating the duration of the warning signal, if such further vehicles have been detected by the sensor.

7. Process in accordance with claim 6, **characterized in that** the data on the first vehicle and on a further second vehicle following the first one in the same lane are taken into consideration.

8. Process in accordance with claim 7, **characterized in that** the time gap between the first and the second vehicle is determined by the control unit and, where the threshold value is exceeded, a duration for the warning signal, which is coherent for the first and for the second vehicle, is determined.

9. Vehicle containing a lane-change support system that is developed to carry out the process in accordance with one of claims 1 to 8.

## Revendications

1. Procédé de détermination de la durée d'un signal avertisseur à émettre dans le cas d'un système d'assistance au changement de voie d'un véhicule automobile, comprenant au moins un dispositif indicateur optique, une unité de commande et au moins un capteur détectant le champ périphérique arrière et latéral du véhicule automobile, dans lequel le système d'assistance au changement de voie est conçu en vue d'indiquer dans le cas d'un changement de voie, des véhicules mettant éventuellement en danger sur des voies adjacentes par l'intermédiaire du dispositif indicateur optique pendant la durée du signal avertisseur à émettre déterminée par l'unité de commande à partir des données du capteur, **caractérisé en ce que** lors du calcul de la durée, l'unité de commande tient également compte, en plus des données du capteur, d'une valeur de calcul de réaction, qui représente une mesure pour le temps de réaction du conducteur, et d'une valeur de calcul de changement de voie, qui représente une mesure pour le temps que nécessite le véhicule automobile pour un changement de voie.

2. Procédé selon la revendication 1, **caractérisé en ce que** l'unité de commande déduit la somme de la valeur de calcul de réaction et de la valeur de calcul de changement de voie à partir de la fin de la durée déterminée à partir des données du capteur.

3. Procédé selon la revendication 1 ou 2, **caractérisé en ce que** la valeur de calcul de changement de voie est déterminée au vu des valeurs enregistrées dans l'unité de commande.

4. Procédé selon l'une quelconque des revendications précédentes, **caractérisé en ce que** les durées d'un changement de voie effectif sont mesurées à des instants déterminés et ces durées sont à la base de la détermination de la valeur de calcul de changement de voie.

5. Procédé selon la revendication 4, **caractérisé en ce que** les changements de voie effectifs sont mesurés par un système d'assistance au conducteur en vue de prévenir le conducteur en cas de sortie de la voie de circulation, comprenant de préférence une caméra et une unité de traitement d'images.

6. Procédé selon l'une quelconque des revendications précédentes, **caractérisé en ce que** lors du calcul de la durée du signal avertisseur, l'unité de commande tient également compte, en plus des données du premier véhicule le plus proche sur la voie de circulation adjacente dans l'espace arrière et latéral, des données d'un ou plusieurs autres véhicules suivant ce dernier sur la même voie, dans le cas où de tels autres véhicules sont détectés par le capteur.

7. Procédé selon la revendication 6, **caractérisé en ce que** les données du premier véhicule et d'un autre second véhicule suivant le premier véhicule sur la même voie sont prises en compte.

8. Procédé selon la revendication 7, **caractérisé en ce que** l'intervalle temporel entre le premier et le second véhicule est déterminé par l'unité de commande et, en cas de passage en dessous d'une valeur de seuil pour l'intervalle temporel, une durée connexe du signal avertisseur est déterminée pour le premier et le second véhicule.

9. Véhicule automobile, comprenant un système d'assistance au changement de voie, qui est conçu en vue de la mise en oeuvre du procédé selon l'une quelconque des revendications 1 à 8.
